# FASCICULE DE BREVET EUROPEEN

(11) **EP 3 116 809 B1**
(45) Date de publication et mention de la délivrance du brevet: **26.07.2023**
(21) Numéro de dépôt: 15717543.1
(22) Date de dépôt: 11.03.2015
(51) Int. Cl.: B65F 1/10, B65F 9/00, B65G 67/24

(54) **DISPOSITIF DE DECHARGEMENT DE DECHETS DANS UNE BENNE DE DECHETERIE**
VORRICHTUNG ZUM ENTLADEN VON ABFALL IN EINEN BEHÄLTER EINER ABFALLENTSORGUNGSANLAGE
DEVICE FOR UNLOADING WASTE INTO A CONTAINER OF A WASTE DISPOSAL FACILITY

(30) Priorité: 11.03.2014 FR 1452014
(43) Date de publication de la demande: 18.01.2017
(73) Titulaire: Caumont, Francis, 64990 Lahonce (FR); Caumont, Jean-Marc, 40390 Saint Martin de Seignanx (FR)
(72) Inventeur: Caumont, Francis, 64990 Lahonce (FR); Caumont, Jean-Marc, 40390 Saint Martin de Seignanx (FR)
(74) Mandataire: Aquinov
(86) Numéro de dépôt international: PCT/FR2015/050607
(87) Numéro de publication internationale: WO 2015/136222

(56) Documents cités:
- EP-A2- 0 516 060
- JP-A- S5 488 674
- US-A- 3 417 883
- US-A- 4 358 238

## Description

La présente invention concerne un dispositif de déchargement de déchets dans une benne de déchèterie du type comprenant les caractéristiques techniques du préambule de la revendication 1. Un dispositif comprenant les caractéristiques techniques du préambule de la revendication 1 est connu du document US 4,358,238.

Le recyclage est de plus en plus maîtrisé et les différents organismes de collecte visent à améliorer la praticité d'une part et la sécurité des usagers d'autre part.

Les déchèteries sont des lieux de collecte différenciée des déchets et sont soumises à des règlementations strictes puisqu'elles reçoivent du public.

De fait, des normes ont été édictées afin d'éviter les accidents, notamment pour les déchets en vrac tels que les déchets verts, les gravats qui sont amenés à l'aide de remorques bagagères le plus souvent.

De tels remorques sont mal adaptées et les utilisateurs ne sont pas rompus aux exercices de déchargement de ces matériaux en vrac.

Or, pour pouvoir décharger les déchets en vrac d'une remorque, celle-ci est approchée du bord d'une plate-forme avec ou sans le véhicule tracteur.

La ridelle arrière est retirée ou abaissée et le contenu est extrait de la remorque, la plupart du temps, ces remorques ne comportent pas de moyens d'inclinaison du plateau.

L'arrière de la remorque est alors au droit d'une benne disposée en contrebas de ladite plate-forme de façon à faire chuter par gravité le contenu de ladite remorque. Il est notamment connu le document JPS5488674 divulguant ce type de benne en contrebas dans laquelle le contenu de la remorque chute par gravité.

Or pour éviter de changer les bennes trop souvent, celle-ci a une contenance de 10 à 30 m³ pour donner un ordre de grandeur, suivant les types de matériaux contenus.

Ceci conduit à une profondeur de 2,50 m, généralement.

Les bennes à gravats, destinées à recueillir des produits lourds et denses ont une profondeur moindre de 1m environ.

Lorsque la benne est vide toute chute dans la benne s'avère extrêmement dangereuse et surtout la hauteur de chute est très supérieure aux hauteurs admissibles, généralement fixées à 0,50 m pour les agents de la déchèterie.

Or seules des rambardes légères protègent contre ce risque de chute, sans pouvoir aucunement l'éviter. En effet, ces rambardes sont extrêmement ajourées avec un seul voire deux tubes horizontaux seulement pour permettre le passage des déchets.

On se trouve en effet en présence de deux besoins antinomiques : assurer la sécurité par une fermeture d'accès aux personnes et permettre le déchargement avec une ouverture d'accès aux déchets.

De fait, il est possible de prévoir une benne avec un fond qui descend au fur et à mesure de la charge mais ceci conduit à un mécanisme compliqué et qu'il faut reproduire sur toutes les bennes, donc d'un coût très élevé.

De plus le mécanisme réduit nécessairement le volume utile en ajoutant du poids, toutes conditions qui ne sont pas compatibles avec des objectifs de rendement et avec les contraintes du recyclage.

La solution la plus simple est de réaliser des bennes de faible hauteur donc de faible capacité, ce qui rejoint le problème précédent à savoir l'incompatibilité avec les objectifs du recyclage puisqu'il faudra multiplier les transports jusqu'aux centres de recyclage qui peuvent être éloignés des centres de collecte. Si les déchets verts par exemple étaient recueillis dans des bennes de 10m³ il faudrait les changer trop souvent.

Il est de plus rappelé que, en cas d'accident, c'est la collectivité en charge de la déchèterie qui sera responsable de tout défaut de sécurité ou de respect des normes.

La présente invention propose une solution pour pallier tous les problèmes soulevés, ceci dans des contions économiques acceptables et en respect des contraintes et des objectifs du recyclage.

La présente invention concerne donc un dispositif selon la revendication 1, et elle est maintenant décrite en détail suivant un mode de réalisation préférentiel, non limitatif, la description s'appuyant sur les dessins annexés, dessins sur lesquels les figures représentent :
- Figure 1 : une vue d'une plate-forme de déchèterie équipée du dispositif selon la présente invention,
- Figures 2A et 2B : une vue du dispositif avec un arrachement partiel, montrant l'agencement latéral, dans les deux positions extrêmes fermées et ouvertes.

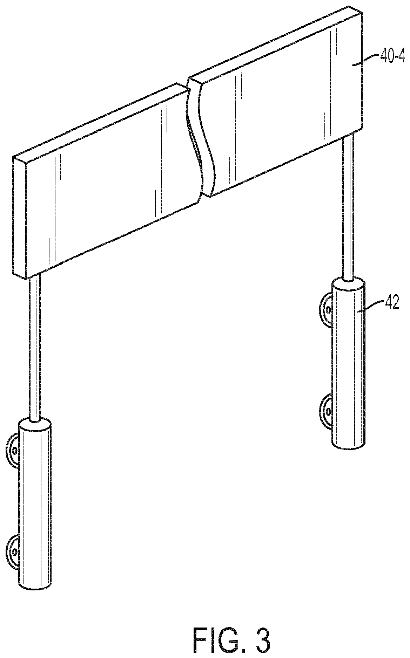

- Figure 3 : une vue de la rambarde escamotable,

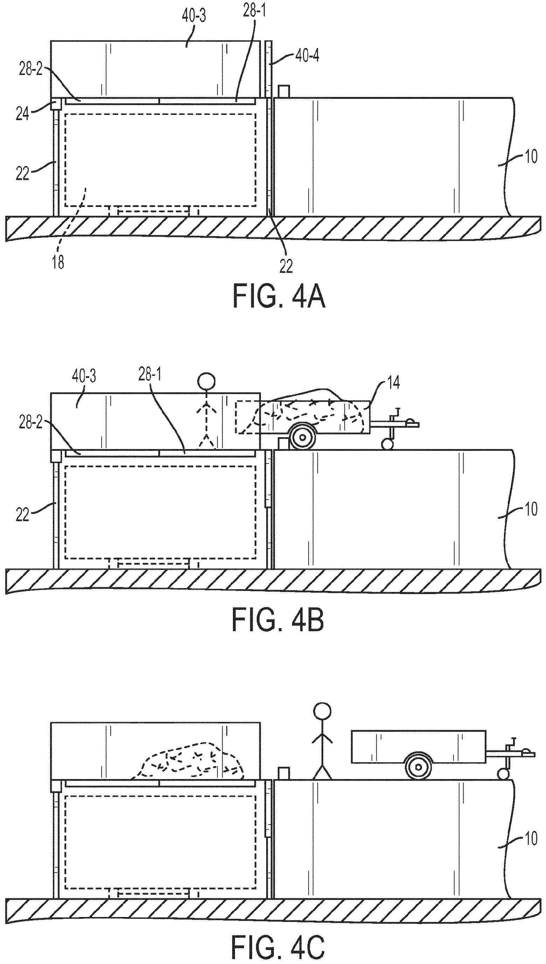

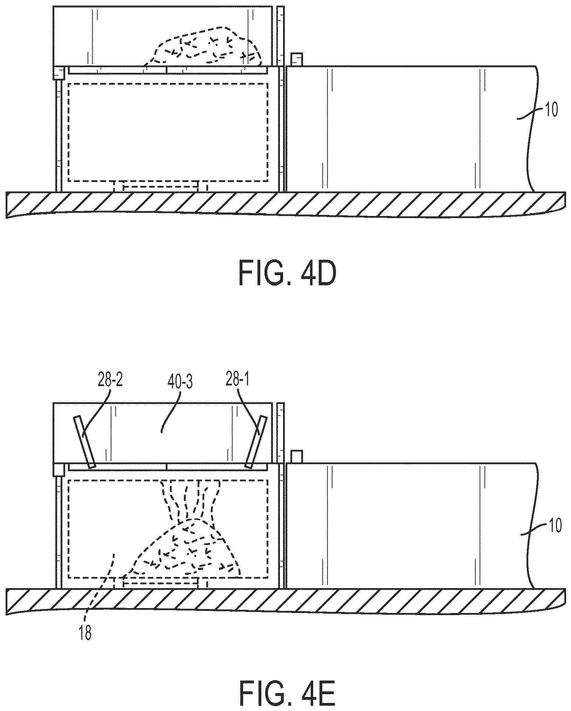

- Figures 4A à 4E : les différentes phases d'une action de déchargement dans une benne en présence du dispositif selon la présente invention.

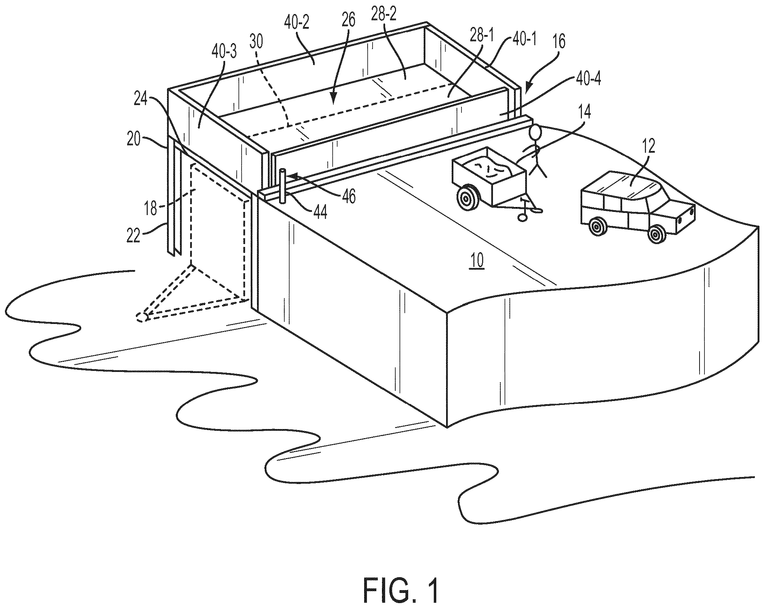

Sur la figure 1, on a représenté une plate-forme 10 de déchèterie qui est généralement en béton, accessible aux véhicules 12 et aux remorques 14, formant un quai.

Cette plate-forme est surélevée par rapport à un espace de travail périphérique accessible aux seuls opérateurs de la déchèterie, cet espace étant destiné à la circulation des camions et des bennes vides et remplies.

Ces plates-formes sont équipées de plusieurs niches 16 prévues pour recevoir chacune une benne 18 destinée à collecter des déchets d'une catégorie : bois, métal, matériaux incinérables, déchets verts ou gravats.

La présente invention est focalisée sur une benne à déchets légers, la charge à évacuer de la remorque étant généralement encombrante, peu maniable, diverse et elle est aussi applicable aux déchets lourds. Une variante non revendiquée est proposée pour les déchets lourds plus spécifiquement, ceci uniquement pour des problèmes de dimensionnement de moyens de manoeuvre comme cela sera expliqué.

Le dispositif selon la présente invention est rapporté dans une niche et reste à demeure, au-dessus de la benne 18 qui peut être mise en place vide et retirée pleine.

Le dispositif selon la présente invention comprend un plateau 20 monté sur des poteaux 22 formant coiffe et laissant le libre accès au-dessous pour la mise en place et le retrait d'une benne par un camion adapté, ceci de façon connue.

Le plateau 20 est horizontal, sensiblement au droit de la plate-forme, dans le même plan.

Ce plateau 20 est composé d'un châssis 24 statique, solidaire des poteaux et d'une trémie 26 mobile.

Cette trémie 26 comporte, dans le mode de réalisation représenté, deux volets 28-1 avant et 28-2 arrière, pivotants, le plan de joint 30 étant parallèle au bord de la plate-forme, au bord du quai, c'est-à-dire sensiblement à l'axe longitudinal de la benne ainsi que des moyens de manoeuvre de ces volets.

Le volet 28-1 avant est au plus proche du bord de la plate-forme et le volet 28-2 arrière est orienté vers l'espace de travail périphérique à la plate-forme.

Ces volets sont mobiles entre :
- une première position dans laquelle ils sont jointifs pour former un plateau unique, surfaciquement continu, horizontal, et
- une seconde position dans laquelle ils basculent pour libérer un espace d'évacuation centrale dans la benne 18 située au-dessous.

Les moyens de manoeuvre des volets pourraient être du type hydraulique ou pneumatique mais sont selon l'invention des vérins 32 électriques du fait de la disponibilité généralement aisée du courant du secteur sur site.

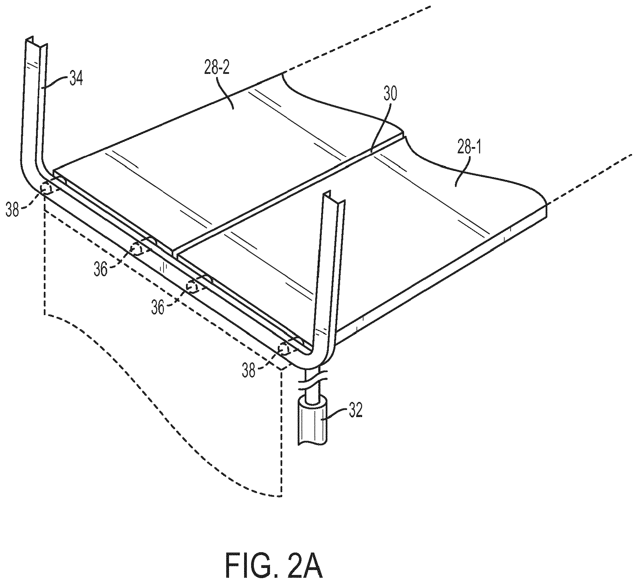

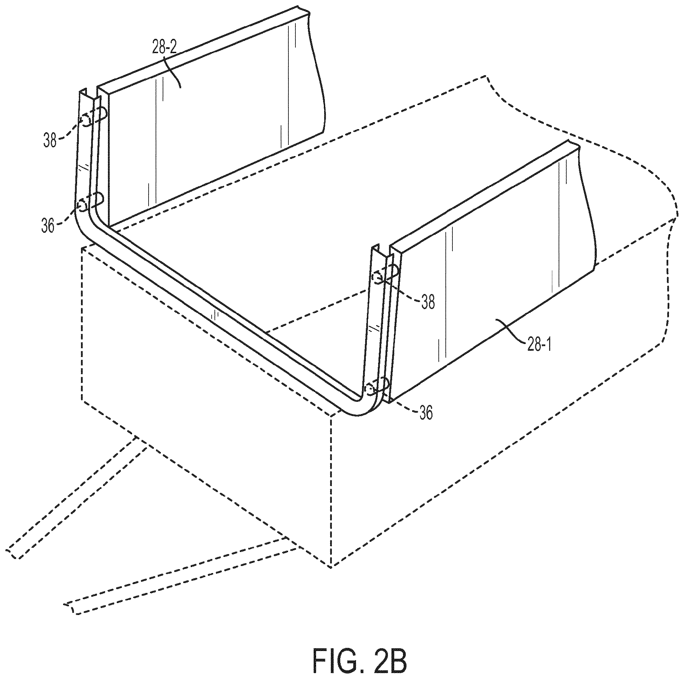

Aussi, en se reportant aux figures 2A et 2B, l'agencement selon la présente comprend des glissières 34 en forme de U de chaque côté du châssis, destinées à recevoir deux axes proximal 36 et distal 38 par rapport au plan de joint 30 solidaires de chacun des volets et de chaque côté, soit quatre axes par volet.

Les vérins 32 sont disposés de façon à écarter les volets. Du fait du guidage, l'écartement conduit à faire remonter chaque volet par son bord distal du plan de joint 30 le long desdites glissières, c'est-à-dire le long des branches du U, tandis que le bord proximal du plan de joint 30 se déplace sur une portion horizontale, libérant la quasi intégralité de l'ouverture de la benne située au-dessous, sans pénétrer dans ce volume utile. Il se produit un effacement des volets.

Cet agencement permet de conserver utile tout le volume de chargement de la benne et de charger avec une excellente répartition des déchets en l'occurrence, à chaque ouverture car il se forme un chargement central médian de la benne au fur et à mesure. La benne est généralement disposée avec sa longueur orientée le long du quai de façon à offrir un espace linéaire plus important de déchargement pour les utilisateurs qui peuvent alors travailler de front.

Cette trémie 26 est entourée, sur les trois côtés arrière et latéraux, de rambardes 40, en l'occurrence trois rambardes 40-1 à 40-3, périphériques, fermées, sensiblement à l'aplomb d'une benne 18 mise en place au-dessous.

Ces rambardes 40 sont solidaires du châssis 24 statique. Les poteaux 22 peuvent même être prolongés au-dessus du plan de la trémie pour assurer la reprise des efforts.

Ces rambardes 40 sont à double paroi de façon à loger les glissières 34 et les vérins 32.

Sur le quatrième côté, il est aussi prévu une rambarde 40-4, mobile et escamotable.

Cette rambarde 40-4 est escamotable verticalement du type guillotine également au moyen de vérins 42 électriques, logés à proximité des poteaux, voire masqués dans les ailes desdits poteaux lorsque ceux-ci sont du type à section en I. Ces vérins sont simplement orientés verticalement.

Ladite rambarde 40-4 passe entre la benne 18 et la face avant de la niche, ceci sans problème puisque les poteaux nécessitent déjà un positionnement de la benne avec un certain écart entre ladite benne et la face avant de la niche ou du quai.

La benne n'a plus besoin d'être à proximité immédiate pour éviter aux déchets de passer lors du déchargement entre ladite benne et ledit quai.

Cette rambarde 40-4 est disposée au bord du quai et de façon préférentielle est guidée par les poteaux 22. Des moyens de sécurité, non représentés, par exemple sous la forme d'un capteur de présence ou d'un limiteur d'effort peuvent être associés aux mouvements de cette rambarde afin de prévenir tout accident lié à un comportement dangereux, inconsidéré et anormal d'un utilisateur.

Afin de pouvoir commander le dispositif, il est prévu au moins une borne 44 de commande des différentes phases d'actionnement. Cette borne est équipée également d'un interrupteur 46 de sécurité du type coup de poing afin d'interrompre tout mouvement.

Le dispositif selon la présente invention est avantageux et répond aux demandes de la législation.

Ainsi, pour l'utilisateur, les manoeuvres se déroulent de la façon maintenant expliquée. L'utilisateur recule avec son véhicule ou manie manuellement sa remorque pour approcher l'arrière au droit du dispositif selon la présente invention.

Une butée sous forme d'un muret de faible hauteur, généralement solidaire de la plate-forme, permet de limiter le recul des roues du train roulant de la remorque et d'éviter la chute de la remorque hors de la plate-forme.

Le dispositif selon l'invention est alors en position d'attente à savoir que la trémie 26 est fermée, les volets étant horizontaux et obturant toute l'ouverture. La rambarde avant 40-4 est escamotée, c'est-à-dire que sa partie supérieure est, au plus, au niveau de la plate-forme.

De fait, l'arrière de la remorque se positionne au-dessus du volet avant généralement car le porte à faux arrière est limité du fait qu'il s'agit d'une déchèterie de ville.

Les déchets à recycler sont évacués de la remorque par l'utilisateur, ceci par tout moyen adapté, pelletage ou basculement de la remorque.

On note que l'utilisateur peut vider sa remorque aisément du fait qu'il n'y a pas de rambarde. Le contenu s'accumule sur le volet avant qui est stable et qui ne peut pas basculer puisqu'il repose sur ses quatre axes dans la partie horizontale du U de la glissière. L'utilisateur ne peut pas tomber au fond de la benne même si celle-ci est vide et offre toute sa hauteur de chute puisque son ouverture est obturée.

L'utilisateur ne peut basculer hors du plateau en circulant sur les volets horizontaux puisqu'ils sont entourés des trois rambardes fixes périphériques.

Pour la collectivité, le risque d'accident est supprimé, du moins les accidents graves liés à la conception de l'installation. De plus la norme ou législation qui peut interdire une hauteur de déchargement supérieure à une profondeur donnée est respectée du fait que le plan des volets est sensiblement dans le plan de la plate-forme, supprimant ainsi tout dénivelé.

Une fois un ou plusieurs déchargements effectués, un opérateur peut agir sur la commande pour engager une double action.

La première action est la remontée de la rambarde avant 40-4 à condition qu'il n'y ait aucun obstacle tel que la présence de l'arrière d'une remorque ou la présence d'un utilisateur.

La seconde action qui intervient une fois la première action de levée de la rambarde avant terminée, consiste en un mouvement des volets, manoeuvrés par les vérins qui déplacent les volets dans les glissières. Ces mouvements sont interdépendants.

Ce mouvement provoque d'abord une inclinaison légère des deux volets qui se séparent en partie médiane au droit du plan de joint puis de façon de plus en plus prononcée, ce qui provoque le déversement des déchets accumulés sur les volets au sein de la benne, ceci en partie médiane de ladite benne, sur toute sa longueur.

Ceci permet de plus une excellente répartition des déchets pour le transport ultérieur jusqu'au centre de recyclage concerné.

Une fois le cycle accompli, les volets reprennent leur place initiale et la rambarde avant est de nouveau escamotée de façon à rendre l'accès aux utilisateurs.

Cette manoeuvre requiert un temps très limité de l'ordre de 50 s certes mais facilite grandement le déchargement des remorques par les utilisateurs particuliers qui ne sont pas rompus à ce type de manoeuvre pour la plupart d'entre eux.

Le temps de cycle du dispositif selon la présente invention est largement compensé par l'accessibilité améliorée pour le retrait des déchets de la remorque tout en respectant la législation mais surtout en évitant les accidents.

Selon une variante, il se trouve que dans le cas des bennes à gravats la hauteur est moindre mais néanmoins hors des normes, ce qui oblige à recourir à un dispositif selon la présente invention également.

Un problème peut se poser car les gravats ont une forte densité et même en petite quantité, il faut des puissances plus importantes pour manoeuvrer des volets à l'effacement.

Dans ce cas, notamment, il est possible de prévoir des volets montés basculants autour d'un seul axe au lieu de deux axes. Dans ce cas, l'axe est sensiblement en position médiane. Les volets sont alors en "équilibre" et les vérins n'assurent qu'un maintien en place.

Ces volets peuvent basculer chacun autour d'un seul axe médian, solidaire du châssis, ce qui est plus simple. Le reste de l'agencement de la trémie, non représenté, reste identique. Cette disposition des volets n'est pourtant pas comprise par l'étendue de l'invention, qui est définie par la revendication 1 annexée.

## Revendications

1. Dispositif de déchargement de déchets dans une benne (18) de déchèterie, ladite déchèterie comprenant une plate-forme d'accès aux véhicules et remorques et au moins une niche (16) destinée à recevoir ladite benne, le dispositif comprennant
- un plateau (20) horizontal, disposé dans le même plan que la plate-forme, au-dessus de ladite benne (18), et comprenant
- un châssis (24) statique et
- une trémie (26) destinée à recevoir le contenu du véhicule et/ou de la remorque, et mobile par rapport audit châssis fixe, ledit dispositif étant **caractérisé en ce que** ladite trémie (26) comporte deux volets (28-1) avant et (28-2) arrière, pivotants, le plan de joint (30) étant parallèle au bord de la plate-forme et le volet (28-1) avant étant au plus proche du bord de la plate-forme, ladite trémie (26) comprenant des moyens de manoeuvre des volets, lesdits moyens de manoeuvre étant des vérins (32) électriques, ladite trémie (26) comprend des glissières (34) en forme de U, disposées de chaque côté du châssis (24) statique, destinées à recevoir deux axes proximal (36) et distal (38) solidaires de chacun des volets et de chaque côté, soit quatre axes par volet, et **en ce que** ledit dispositif comprend, sur les trois côtés arrière et latéraux, des rambardes (40-1 à 40-3), périphériques, fermées, solidaires du châssis (24) statique et autour de la trémie, lesdites rambardes (40) étant à double paroi et logeant les glissières (34) et les vérins (32).

2. Dispositif de déchargement de déchets selon la revendication 1, **caractérisé en ce que** la trémie (26) comprend les moyens de manoeuvre des volets (28-1,28-2) aptes à les manoeuvrer entre :
- une première position dans laquelle ils sont jointifs pour former un plateau unique, surfaciquement continu, horizontal, et
- une seconde position dans laquelle ils basculent pour libérer un espace d'évacuation centrale dans la benne (18) située au-dessous.

3. Dispositif de déchargement de déchets selon l'une quelconque des revendications précédentes, **caractérisé en ce qu'**il comprend sur le quatrième côté, avant, une rambarde (40-4), mobile et escamotable.

4. Dispositif de déchargement de déchets selon la revendication 3, **caractérisé en ce que** la rambarde (40-4) avant est escamotable verticalement au moyen de vérins (42) électriques.

5. Dispositif de déchargement de déchets selon l'une quelconque des revendications précédentes, **caractérisé en ce que** le châssis (24) statique est disposé sur des poteaux de telle sorte qu'il soit situé au-dessus de la benne (18), de façon à ce que l'ouverture de la trémie corresponde à celle de la benne (18).

## Patentansprüche

1. Vorrichtung zum Abladen von Müll in einen Großbehälter (18) einer Mülldeponie, die Mülldeponie umfassend eine Zugangsplattform für Fahrzeuge und Anhänger und mindestens eine Aussparung (16), die zum Aufnehmen des Großbehälters bestimmt ist, die Vorrichtung umfassend
- eine horizontale Platte (20), die in derselben Ebene wie die Plattform über dem Großbehälter (18) angeordnet ist, und umfassend
- einen statischen Rahmen (24) und
- einen Bunker (26), der zum Aufnehmen des Inhalts des Fahrzeugs und/oder des Anhängers bestimmt und bewegbar in Bezug auf den festen Rahmen ist, wobei die Vorrichtung **dadurch gekennzeichnet ist, dass**
der Bunker (26) zwei drehende Klappen, eine vordere (28-1) und eine hintere (28-2), aufweist, wobei die Verbindungsebene (30) parallel zu der Plattform ist und die vordere Klappe (28-1) am nächsten zu der Plattform liegt, wobei der Bunker (26) Betätigungsmittel für die Klappen umfasst, wobei die
Betätigungsmittel elektrische Zylinder (32) sind, wobei der Bunker (26) Schütten (34) in U-Form, die an jeder Seite des statischen Rahmens (24) angeordnet sind, die zum Aufnehmen von zwei Achsen, einer proximalen (36) und einer distalen (38), die jeweils mit den Klappen und jeder Seite fest verbunden sind, also vier Achsen pro Klappe, bestimmt sind, und **dass** die Vorrichtung an den drei Seiten, der hinteren und den seitlichen, umlaufende, geschlossene Geländer (40-1 bis 40-3), die mit dem statischen Rahmen (24) fest verbunden und um den Bunker herum umfasst, wobei die Geländer (40) doppelwandig sind und die Schütten (34) und die Zylinder (32) unterbringen.

2. Vorrichtung zum Abladen von Müll nach Anspruch 1, **dadurch gekennzeichnet, dass** der Bunker (26) die Betätigungsmittel der Klappen (28-1, 28-2) umfasst, die geeignet sind, diese zu betätigen zwischen:
- einer ersten Position, in der sie aneinandergesetzt sind, um eine einzige, flächenbezogen kontinuierliche, horizontale Platte auszubilden, und
- einer zweiten Position, in der sie kippen, um einen mittigen Austrittsraum in dem Großbehälter (18), der sich darunter befindet, freizugeben.

3. Vorrichtung zum Abladen von Müll nach einem der vorstehenden Ansprüche, **dadurch gekennzeichnet, dass** sie auf der vierten Seite, der vorderen, ein bewegbares und einziehbares Geländer (40-4) umfasst.

4. Vorrichtung zum Abladen von Müll nach Anspruch 3, **dadurch gekennzeichnet, dass** das vordere Geländer (40-4) mittels des elektrischen Zylinders (42) vertikal einziehbar ist.

5. Vorrichtung zum Abladen von Müll nach einem der vorstehenden Ansprüche, **dadurch gekennzeichnet, dass** der statische Rahmen (24) auf Pfosten angeordnet ist, so dass er sich so über dem Großbehälter (18) befindet, **dass** die Öffnung des Bunkers der des Großbehälters (18) entspricht.

## Claims

1. A device for unloading waste into a container (18) of a waste disposal facility, said waste disposal facility comprising an access platform for vehicles and trailers and at least one recess (16) intended to receive said container, the device comprising
- a horizontal plate (20) arranged in the same plane as the platform, above said container (18), and comprising
- a static frame (24) and
- a hopper (26) which is intended to receive the contents of the vehicle and/or of the trailer and is movable relative to said fixed frame, said device being **characterized in that**
said hopper (26) comprises two pivoting flaps, namely a front flap (28-1) and rear flap (28-2), the joint plane (30) being parallel to the edge of the platform and the front flap (28-1) being closest to the edge of the platform, said hopper (26) comprising means for maneuvering the flaps, said
maneuvering means being electrical jacks (32), said hopper (26) comprises U-shaped slides (34) which are arranged on each side of the static frame (24) and are intended to receive two shafts, namely a proximal shaft (36) and distal shaft (38), which are secured to each of the flaps and to each side, i.e. four axes per flap, and **in that** said device comprises, on the three rear and lateral sides, peripheral, closed guardrails (40-1 to 40-3) that are secured to the static frame (24) and around the hopper, said guardrails (40) being double-walled and housing the slides (34) and the jacks (32).

2. The waste unloading device according to claim 1, **characterized in that** the hopper (26) comprises the means for maneuvering the flaps (28-1, 28-2) that are capable of maneuvering said flaps between:
- a first position in which they are contiguous to form a single, superficially continuous, horizontal plate, and
- a second position in which they tilt to release a central discharge space into the container (18) located underneath.

3. The waste unloading device according to either of the preceding claims, **characterized in that** it comprises, on the fourth, front side, a movable and retractable guardrail (40-4).

4. The waste unloading device according to claim 3, **characterized in that** the front guardrail (40-4) is vertically retractable by means of electric jacks (42).

5. The waste unloading device according to any of the preceding claims, **characterized in that** the static frame (24) is arranged on posts such that it is located above the container (18), in such a way that the opening of the hopper corresponds to that of the container (18).
